(19) Europäisches Patentamt
European Patent Office
Office européen des brevets

(11) **EP 2 768 166 A1**

(12) **EUROPEAN PATENT APPLICATION**

(43) Date of publication:
**20.08.2014 Bulletin 2014/34**

(51) Int Cl.:
***H04B 17/00*** (2006.01)

(21) Application number: **13305186.2**

(22) Date of filing: **19.02.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ALCATEL LUCENT
92100 Boulogne-Billancourt (FR)**

(72) Inventors:
• **Thomas, Pierre
78141 Velizy Villacoublay (FR)**
• **Guillemain, Christian
78141 Velizy Villacoublay (FR)**

• **Vienne, Nicolas
78141 Velizy Villacoublay (FR)**
• **De Rosso, Christian
91620 Nozay (FR)**
• **Salles, Jérôme
78141 Velizy Villacoublay (FR)**

(74) Representative: **Loyer & Abello
9, rue Anatole de la Forge
75017 Paris (FR)**

Remarks:
Amended claims in accordance with Rule 137(2)
EPC.

(54) **Validation of a frequency channel in a point-to-point microwave radio system**

(57) A method for validating a frequency channel in a point-to-point microwave radio system (100) comprising a first fixed radio station (1) at a first site (A) and a second fixed radio station (4) at a second site (B) distant from the first site, the method comprising:

activating a radio transmitter of the first radio station to emit a radio signal in a frequency channel to be validated,
measuring a received signal level in the frequency channel to be validated with a radio receiver of the second radio station,
comparing the measured received signal level to an expected received signal level,
setting a validation status of the frequency channel as a function of the signal level comparison result.

Fig. 7

# Description

## Field of the invention

The invention relates to the technical field of microwave transmission equipment, in particular point-to-point microwave radio transmitters and receivers.

## Background

Point-to-point microwave radios are ideal for transmission of traditional telephony traffic as well as Internet data for high-speed networks. They are widely used for private data networks (WANs, LANs), mobile backhauling (2G, 2.5G and 3G), utility networks (railways, electricity, pipelines), and public safety communications infrastructure. Point-to-point microwave radios, in particular multi-capacity, multi-band radios, are able to solve a multitude of short haul and long haul telecommunications access problems. Such radios operate for example on carrier frequencies from 4 GHz up to 40 GHz.

The operation of microwave radio systems can be disrupted by external radio sources found in the environment of the system. Therefore, a need exists for methods and procedures adapted to survey the electromagnetic environment of a point-to-point microwave radio system and detect potential interferers and similar problems.

## Summary

In an embodiment, the invention provides a method for validating a frequency channel in a point-to-point microwave radio system comprising a first fixed radio station at a first site and a second fixed radio station at a second site distant from the first site, the method comprising:

    activating a radio transmitter of the first radio station to emit a radio signal in a frequency channel to be validated,
    measuring a received signal level in the frequency channel to be validated with a radio receiver of the second radio station,
    comparing the measured received signal level to an expected received signal level,
    setting a validation status of the frequency channel as a function of the signal level comparison result.

According to embodiments, such a method can comprise one or more of the features below.

In an embodiment, the method further comprises computing the expected received signal level (RSL) with an electromagnetic simulation tool.

In an embodiment, the expected received signal level is computed as a function of at least one parameter selected in the list consisting of: signal polarization, link distance, transmitter antenna specification, receiver antenna specification, transmitter power and internal losses of radio transmitter and internal losses of radio receiver.

In an embodiment, the received signal level is measured at a central frequency of the frequency channel to be validated.

In an embodiment, the method further comprises comparing a difference between the measured received signal level and the expected received signal level to a predefined margin, and setting the validation status to invalid in response to the predefined margin being exceeded.

In an embodiment, the method further comprises:

    measuring a signal power spectral density as a function of frequency by scanning the frequency channel to be validated with the radio receiver of the second radio station, wherein
    the frequency channel is scanned using a narrow filter while the radio transmitter of the first radio station is activated so as to emit a radio signal in the frequency channel to be validated,
    measuring a background power spectral density as a function of frequency by scanning the frequency channel to be validated with the radio receiver of the second radio station, wherein the frequency channel is scanned using the narrow filter while the radio transmitter of the first radio station is turned off,
    comparing the measured signal power spectral density to the measured background power spectral density, and
    setting the validation status of the frequency channel as a function of the power spectral density comparison result.

In an embodiment, the method further comprises:

    computing a signal-to-noise ratio as a function of the measured signal power spectral density and the measured background power spectral density, and setting the validation status to invalid in response to the signal-to-noise ratio being lower than a predefined threshold.

In an embodiment, the method further comprises:

    in response to the validation status being set to invalid, measuring a background power spectral density as a function of frequency by scanning an operational frequency band adjacent to the frequency channel with the radio receiver of the second radio station, wherein the frequency band is scanned while the radio transmitter of the first radio station is turned off. Thanks to this step, it is possible to seek an available frequency channel at a different frequency upon finding that the frequency channel is invalid, e.g. due to powerful interferers found in the environment.

In an embodiment, the narrow filter has a bandwidth smaller than the width of the frequency channel of the link to be implemented.

In an embodiment, the method further comprises raising an alarm in response to the validation status being set to invalid.

Such a method can be used on various occasions during the exploitation of a communications network that includes the point-to-point microwave radio system, e.g. for remediation in response to uncontrolled performance degradation of an established link, or for prevention before setting up a new link through the point-to-point microwave radio system.

In an embodiment, the invention provides a computer program product comprising computer-executable instructions that perform all the steps of the above method when executed.

In an embodiment, the invention provides a control device for a point-to-point microwave radio system comprising a first fixed radio station at a first site and a second fixed radio station at a second site distant from the first site, the control device comprising:

a radio transmitter control module capable of activating a radio transmitter of the first radio station to emit a radio signal in a frequency channel to be validated,

a measurement control module capable of controlling a radio receiver of the second radio station to measure a received signal level in the frequency channel to be validated, and

a status determination module capable of comparing the measured received signal level to an expected received signal level, and setting a validation status of the frequency channel as a function of the signal level comparison result.

In an embodiment, the device further comprises an electromagnetic simulation module capable of computing the expected received signal level.

In an embodiment, the radio transmitter control module is further capable of turning on and off the radio transmitter, and

the measurement control module is further capable of :

controlling the radio receiver to measure a signal power spectral density as a function of frequency by scanning the frequency channel to be validated, wherein the frequency channel is scanned using a narrow filter while the radio transmitter of the first radio station is activated so as to emit a radio signal in the frequency channel to be validated, and

controlling the radio receiver to measure a background power spectral density as a function of frequency by scanning the frequency channel to be validated with the radio receiver of the second radio station, wherein the frequency channel is scanned using the narrow filter while the radio transmitter of the first radio station is turned off, and

the status determination module is further capable of comparing the measured signal power spectral density to the measured background power spectral density, and setting the validation status of the frequency channel as a function of the power spectral density comparison result.

Such a control device can be implemented in various manners, e.g. as a stand-alone unit or as a component of a radio station or as a distributed device. In an embodiment, the control device is arranged in the first and/or second radio station. In an embodiment, the control device is arranged in a remote network management system operatively connected to the first and second radio stations.

Aspects of the invention aim at providing efficient procedures for ascertaining the operability of existing or new radio links in a microwave point-to-point system, diagnosing potential issues and identifying corrective actions needed. Aspects of the invention aim at implementing such procedures in an automated manner. Aspects of the invention stem from the observation by the inventors that antenna alignment and line of sight clearance of the path between the radio stations can be validated using a theoretical model of electromagnetic propagation. Aspects of the invention stem from the observation by the inventors that a high-gain directional antenna in a radio station is optimal for detecting environmental interferers with a high sensitivity.

**Brief description of the drawings**

These and other aspects of the invention will be apparent from and elucidated with reference to the embodiments described hereinafter, by way of example, with reference to the drawings.

Figure 1 is a functional representation of a point-to-point microwave radio system in accordance with an embodiment.

Figure 2 is a graph showing a Receiver Threshold degradation as a function of signal-to-noise ratio for different Bit-error rate parameters in a point-to-point microwave radio system.

Figure 3 is a table showing input and output parameters of an electromagnetic computation model suitable for simulating the system of Figure 1.

Figure 4 is a graph showing the gain of an antenna as a function of azimuth angle.

Figure 5 is a functional representation of a microwave radio station.

Figure 6 is a flow chart showing a first validation method that can be carried out in the system of Figure 1.

Figure 7 is a flow chart showing a second validation method that can be carried out in the system of Figure 1.

## Detailed description of the embodiments

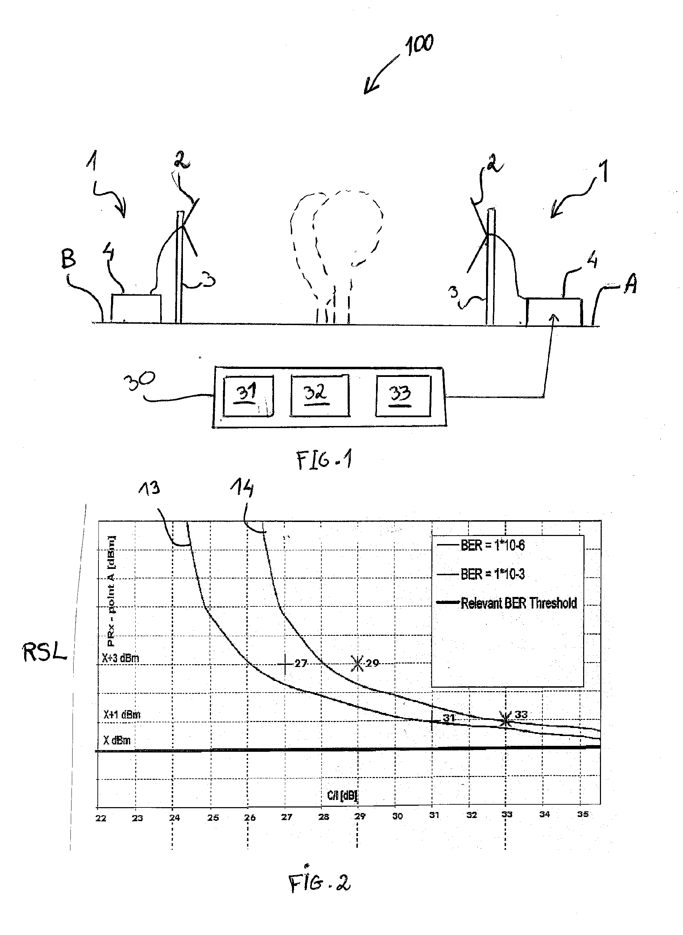

With reference to Figure 1, a microwave point-to-point radio communication system 100 is schematically depicted. The system comprises two radio stations 1 located at respective sites A and B. A radio station 1 comprises a high-gain directional antenna 2 arranged above the ground at the top of a pole 3 or similar support and pointed towards the other site. The antenna 2 is connected to a communication unit 4 that includes a hyper-frequency radio transmitter and/or radio receiver, depending on the unidirectional or bidirectional capability of the system. In an embodiment, the communication units 4 are connected to further nodes of a communication network, not shown, so that the microwave radio link takes part in a broader communication network, e.g. for mobile backhauling or the like.

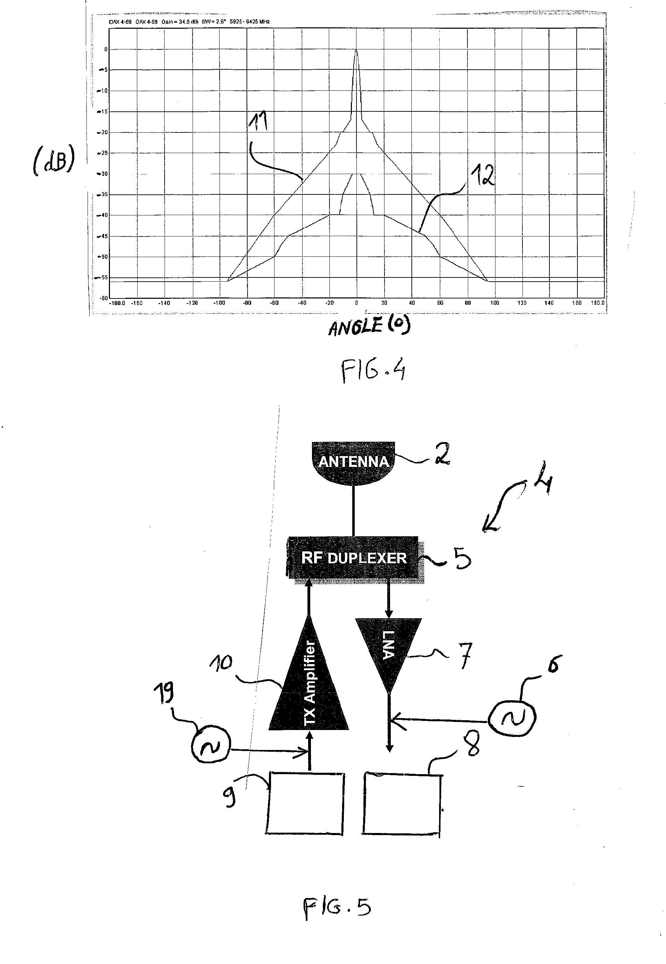

Figure 5 depicts an embodiment of the communication unit 4 in a bidirectional system. The antenna 2 is connected to a radio-frequency duplexer 5 that interfaces with both a receiver function and a transmitter function. The receiver function includes a low-noise amplifier (LNA) 7, a local oscillator 6 for heterodyne detection to translate the signal to an intermediate frequency adapted to the demodulator, and a baseband signal processing unit 8 for analog-to-digital conversion, demodulation, decoding and processing of the received signal. The transmitter function similarly includes a baseband signal processing unit 9, a modulator, an up-converter with associated Local Oscillator 19 and a power amplifier 10.

In a preferred embodiment, the radio system 100 is capable of establishing a communication link operating on a pair of frequency channels (i.e. one frequency channel for each direction of transmission) within a predefined range of frequencies, e.g. an authorized range defined by administrative rules. For that purpose, frequency-tunable transmitters and receivers are provided in the communication units 4.

Figure 4 depicts the shape of the antenna gain pattern envelope versus azimuth angle in an illustrative embodiment of the high-gain directional antenna 2. Graph 11 depicts the horizontal polarization gain and graph 12 depicts the associated vestigial gain on the contra-polarization, i.e. the vertical polarization here, as a function of azimuth. The antenna exhibits both a high gain in the main lobe, preferably 35dBi or higher, and a narrow angular opening beamwidth aperture of the main lobe.

The presence of electromagnetic noise in the environment of the radio system 100 may influence the reliability of the communication link. Figure 2 illustrates an example of such influence in a quantitative manner in an example using a 128QAM modulation scheme in an STM-1 link. The abscissa shows the signal-to-noise ratio C/I in dB and the ordinate show the receiver threshold degradation in dB. Graph 13 depicts the receiver threshold degradation for a bit-error rate (BER) of $10^{-3}$ and graph 14 depicts the receiver threshold degradation for a BER of $10^{-6}$. It is seen that the demodulator in that case detects the signal substantially without errors when C/I is higher than 35 dB, whereas the demodulator is unlocked when C/I is lower than 24 dB causing permanent outage of the link. Within the 10 dB range between these two limits, random errors will typically be generated in a more or less severe manner. In view of that situation, a precise characterization of the electromagnetic environment of the link will be useful, either before deployment the link to assess its feasibility in a specific frequency channel, or during the operations of an established link, e.g. to diagnose and remedy performance degradation of the established link.

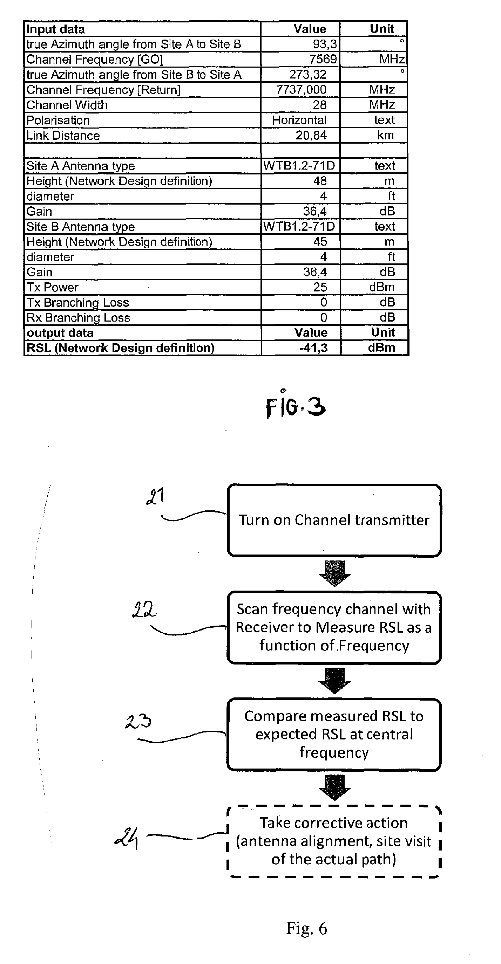

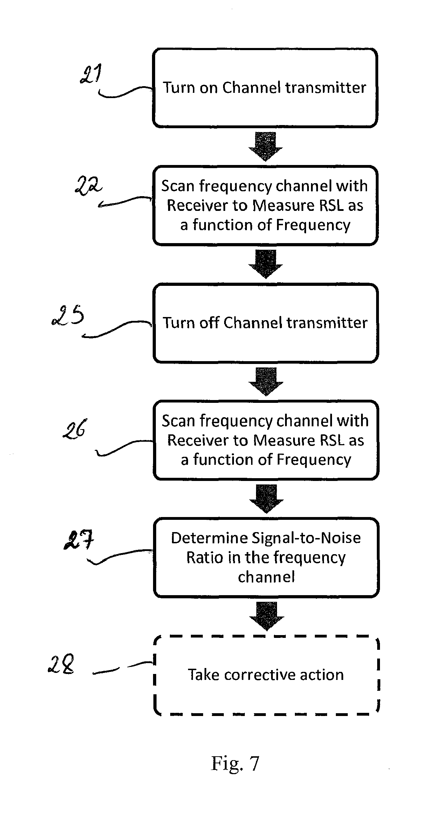

With reference to figures 6 and 7, there will now be described a procedure for assessing the feasibility and/or performance of a radio link as a function of the electromagnetic environment of the radio system 100. It is assumed that a frequency channel has been selected to deploy a new radio link between site A and site B. The sequence of steps depicted in figure 6 and the sequence of steps depicted in figure 7 can be implemented as an integrated procedure or as two independent procedures.

Turning now to figure 6, a first validation procedure will be described.

In step 21, the radio transmitter at site A is turned on to send a signal at the intended carrier frequency. However, the signal is sent at a low modulation index and the lower channel width to occupy a narrow channel width and the transmitter power is preferably set below the nominal power, e.g. by 10 dB, to reduce the risk of impacting parallel established links on adjacent channels.

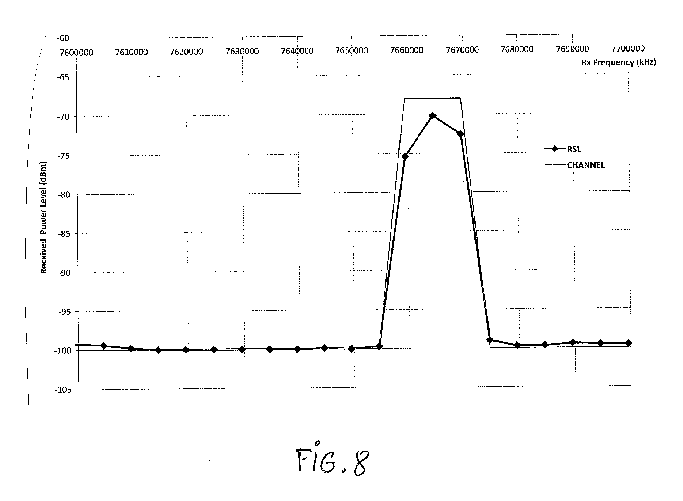

In step 22, the actual RSL, denoted RSLa, is measured by the radio receiver in the selected channel in site B and recorded as a function of frequency. This measurement is performed by varying the local oscillator frequency with a small frequency step, e.g. a step of 5MHz. Figure 8 shows the measured RSL in an example in which the carrier frequency of the transmitter is 7664 MHz, e.g. corresponding to channel width set to 7 MHz, and the frequency scan is performed by the receiver between 7600 and 7700 MHz with a step of 5 MHz.

In step 23, an electromagnetic simulation is performed to compute the expected RSL at the carrier frequency at the receiver in site B, as a function of known physical parameters of the link, including geographical location of sites A and B, link distance; selected channel frequency, channel width, Polarization, antenna height, antenna gain, transmitter power and the like. Such computation can be done with commercially available software suites, e.g. the Pathloss® software suite by Contract Telecommunication Engineering Ltd., incorporated in Canada.

Figure 3 is a table showing the main input data used in an illustrative example of his computation. In that example, which does not relate to the same system as in Figure 8, the expected RSL, denoted RSLe, is

$$RSLe = -41.3 \, dBm$$

In step 23 the actual RSL is compared to the expected RSL by performing the following test:

$$RSLa - RSLe > T? \qquad \text{(Test 1)}$$

where T denotes a predefined margin, e.g. $T = -4dB$.

If Test 1 is negative, e.g. $RSLa < -45.3 \, dBm$, the process continues to step 24 in which an alarm is raised to indicate that corrective action must be taken. Due to the fact that the received signal level is substantially below expectations, the corrective action may preferably include basic checks such as verifying antenna alignment at sites A and B and ascertaining that physical obstacles, e.g. trees as depicted in phantom line in Figure 1, do not obstruct the signal path.

If Test 1 is positive, the process continues to step 25 in Figure 7.

Turning now to Figure 7, a second validation procedure will be described. This second procedure involves two narrowband scans of the frequency channel with the radio receiver, with transmitter on and off, to record the signal-to-noise ratio as a function of frequency. When this procedure is performed in sequence with the procedure of Figure 6, the first narrowband scan with transmitter on has already been conducted at steps 21 and 22 and need not be repeated.

In step 25, the transmitter is turned off to stop emitting in the selected frequency channel. Other parallel links that may exist in the system remain operative.

In step 26, a narrow scan of the frequency channel is performed again with the radio receiver. This enables to check the presence and power level and spectrum width of an in-band interferer.

In step 27, the signal-to-noise ratio C/I is computed by correlating the two frequency scan results and compared to a predefined receiver threshold.

In step 28, if the signal-to-noise ratio does not achieve the expected level over the frequency channel, an alarm is raised so that corrective action can be taken. The corrective action may involve further investigation about the interfering signals detected at step 26. In an embodiment, the corrective action also includes scanning a broader frequency range with the radio receiver, e.g. with a broader frequency step, to seek an adjacent available channel.

The above procedures can be implemented in an automated manner by suitably programing a control device which is schematically depicted at numeral 30 in Figure 1. The validation status of the channel can be implemented as a mere binary flag or more complex variable. The control device includes a transmitter control module 31 to interact with the radio transmitter, a measurement control module 32 to interact with the radio receiver and status determination module 33 to process the measurements as indicated above. In figure 1, control device 30 is illustratively incorporated in the communication unit 4 of site A. In that case, interaction of the control device with the other site B may take place through a dedicated radio link. The above procedures are preferably executed at both sites to perform the measurements with both receivers.

The above procedures and systems make it possible to improve the QoS of an operational network upon deployment of a new link or during a troubleshooting operation of an impaired microwave link. The automatic scanning procedure of the local and remote receivers makes it possible to check the Line-of-sight clearance and correct antenna alignment and to check the presence and power level and spectrum width of interferers in the selected frequency channel and possibly adjacent channels.

Elements such as the control modules could be e.g. hardware means like e.g. an ASIC, or a combination of hardware and software means, e.g. an ASIC and an FPGA, or at least one microprocessor and at least one memory with software modules located therein.

The invention is not limited to the described embodiments. The appended claims are to be construed as embodying all modification and alternative constructions that may be occurred to one skilled in the art, which fairly fall within the basic teaching here set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

**Claims**

1. A method for validating a frequency channel in a point-to-point microwave radio system (100) comprising a first fixed radio station (1) at a first site (A) and a second fixed radio station (1) at a second site (B) distant from the first site, the method comprising:

   activating (21) by a control device a radio transmitter of the first radio station to emit a radio signal in a frequency channel to be validated, controlling by the control device a radio receiver of the second radio station to measure (22) a received signal level in the frequency channel to be validated

comparing (23) by the control device the measured received signal level to an expected received signal level,

setting (24) by the control device a validation status of the frequency channel as a function of the signal level comparison result.

2. A method in accordance with claim 1, further comprising:

computing (23) the expected received signal level with an electromagnetic simulation tool.

3. A method in accordance with claim 2, wherein the expected received signal level is computed as a function of at least one parameter selected in the list consisting of: signal polarization, link distance, transmitter antenna specification, receiver antenna specification, transmitter power and internal losses of radio transmitter and internal losses of radio receiver.

4. A method in accordance with any one of claims 1 to 3, wherein the received signal level is measured at a central frequency of the frequency channel to be validated.

5. A method in accordance with any one of claims 1 to 4, further comprising comparing a difference between the measured received signal level and the expected received signal level to a predefined margin, and setting the validation status to invalid in response to the predefined margin being exceeded.

6. A method in accordance with any one of claims 1 to 5, further comprising:

measuring (22) a signal power spectral density as a function of frequency by scanning the frequency channel to be validated with the radio receiver of the second radio station, wherein the frequency channel is scanned using a narrow filter and the radio transmitter of the first radio station is activated so as to emit a radio signal in the frequency channel to be validated, measuring (26) a background power spectral density as a function of frequency by scanning the frequency channel to be validated with the radio receiver of the second radio station, wherein the frequency channel is scanned using the narrow filter while the radio transmitter of the first radio station is turned off, comparing (27) the measured signal power spectral density to the measured background power spectral density, setting (28) the validation status of the frequency channel as a function of the power spectral density comparison result.

7. A method in accordance with claim 6, further comprising:

computing (27) a signal-to-noise ratio as a function of the measured signal power spectral density and the measured background power spectral density, and setting the validation status to invalid in response to the signal-to-noise ratio being lower than a predefined threshold.

8. A method in accordance with any one of claims 6 to 7, further comprising:

in response to the validation status being set to invalid, measuring (28) a background power spectral density as a function of frequency by scanning an operational frequency band adjacent to the frequency channel with the radio receiver of the second radio station, wherein the frequency band is scanned while the radio transmitter of the first radio station is turned off.

9. A method in accordance with any one of claims 6 to 8, wherein the narrow filter has a bandwidth smaller than the width of the frequency channel.

10. A method in accordance with any one of claims 1 to 9, further comprising:

raising (24, 28) an alarm in response to the validation status being set to invalid.

11. A computer program product comprising computer-executable instructions that perform all the steps of a method in accordance with any one of claims 1 to 10 when executed.

12. A control device (30) for a point-to-point microwave radio system (100) comprising a first fixed radio station at a first site and a second fixed radio station at a second site distant from the first site, the control device comprising:

a radio transmitter control module (31) capable of activating a radio transmitter of the first radio station to emit a radio signal in a frequency channel to be validated, a measurement control module (32) capable of controlling a radio receiver of the second radio station to measure a received signal level in the frequency channel to be validated, and a status determination module (33) capable of comparing the measured received signal level to an expected received signal level, and setting a validation status of the frequency channel as a function of the signal level comparison result.

13. A control device in accordance with claim 12, further comprising:

> an electromagnetic simulation module capable of computing the expected received signal level.

14. A control device in accordance with claim 12 or 13, wherein the radio transmitter control module (31) is further capable of turning on and off the radio transmitter, and

wherein the measurement control module (32) is further capable of :

> controlling the radio receiver to measure a signal power spectral density as a function of frequency by scanning the frequency channel to be validated, wherein the frequency channel is scanned using a narrow filter while the radio transmitter of the first radio station is activated so as to emit a radio signal in the frequency channel to be validated,
>
> controlling the radio receiver to measure a background power spectral density as a function of frequency by scanning the frequency channel to be validated with the radio receiver of the second radio station, wherein the frequency channel is scanned using the narrow filter while the radio transmitter of the first radio station is turned off,
>
> wherein the status determination module is further capable of comparing the measured signal power spectral density to the measured background power spectral density, and setting the validation status of the frequency channel as a function of the power spectral density comparison result.

15. A control device in accordance with any one of claim 12 to 14, wherein the control device (30) is arranged in the first or second radio station (1).

**Amended claims in accordance with Rule 137(2) EPC.**

1. A method for validating a frequency channel in a point-to-point microwave radio system (100) comprising a first fixed radio station (1) at a first site (A) and a second fixed radio station (1) at a second site (B) distant from the first site, the method comprising:

> activating (21) by a control device a radio transmitter of the first radio station to emit a radio signal in a frequency channel to be validated,
>
> controlling by the control device a radio receiver of the second radio station to measure (22) a received signal level in the frequency channel to be validated comparing (23) by the control device the measured received signal level to an expected received signal level,

> setting (24) by the control device a first validation status of the frequency channel as a function of the signal level comparison result,
>
> measuring (22) a signal power spectral density as a function of frequency by scanning the frequency channel to be validated with the radio receiver of the second radio station, wherein the frequency channel is scanned using a narrow filter and the radio transmitter of the first radio station is activated so as to emit a radio signal in the frequency channel to be validated,
>
> measuring (26) a background power spectral density as a function of frequency by scanning the frequency channel to be validated with the radio receiver of the second radio station, wherein the frequency channel is scanned using the narrow filter while the radio transmitter of the first radio station is turned off,
>
> comparing (27) the measured signal power spectral density to the measured background power spectral, and
>
> setting (28) by the control device a second validation status of the frequency channel as a function of the power spectral density comparison result.

2. A method in accordance with claim 1, further comprising: computing (23) the expected received signal level with an electromagnetic simulation tool.

3. A method in accordance with claim 2, wherein the expected received signal level is computed as a function of at least one parameter selected in the list consisting of: signal polarization, link distance, transmitter antenna specification, receiver antenna specification, transmitter power and internal losses of radio transmitter and internal losses of radio receiver.

4. A method in accordance with any one of claims 1 to 3, wherein the received signal level is measured at a central frequency of the frequency channel to be validated.

5. A method in accordance with any one of claims 1 to 4, further comprising comparing a difference between the measured received signal level and the expected received signal level to a predefined margin, and setting the first validation status to invalid in response to the predefined margin being exceeded.

6. A method in accordance with claim 1, further comprising: computing (27) a signal-to-noise ratio as a function of the measured signal power spectral density and the measured background power spectral density, and setting the validation status to invalid in response to the signal-to-noise ratio being lower than a predefined threshold.

**7.** A method in accordance with any one of claims 1 to 6, further comprising:

in response to the second validation status being set to invalid, measuring (28) a background power spectral density as a function of frequency by scanning an operational frequency band adjacent to the frequency channel with the radio receiver of the second radio station, wherein the frequency band is scanned while the radio transmitter of the first radio station is turned off.

**8.** A method in accordance with any one of claims 1 to 7, wherein the narrow filter has a bandwidth smaller than the width of the frequency channel.

**9.** A method in accordance with any one of claims 1 to 8, further comprising:

raising (24, 28) an alarm in response to the first or second validation status being set to invalid.

**10.** A method in accordance with any one of claims 1 to 9, wherein the steps of measuring (22, 26), computing (27) the signal-to-noise ratio and setting (28) the second validation status are performed in response setting the first validation status of the frequency channel to valid.

**11.** A computer program product comprising computer-executable instructions that perform all the steps of a method in accordance with any one of claims 1 to 10 when executed.

**12.** A control device (30) for a point-to-point microwave radio system (100) comprising a first fixed radio station at a first site and a second fixed radio station at a second site distant from the first site, the control device comprising:

a radio transmitter control module (31) capable of activating a radio transmitter of the first radio station to emit a radio signal in a frequency channel to be validated,
a measurement control module (32) capable of controlling a radio receiver of the second radio station to measure a received signal level in the frequency channel to be validated, and
a status determination module (33) capable of comparing the measured received signal level to an expected received signal level, and setting a first validation status of the frequency channel as a function of the signal level comparison result,
wherein the radio transmitter control module (31) is further capable of turning on and off the radio transmitter, and
wherein the measurement control module (32) is further capable of:

controlling the radio receiver to measure a signal power spectral density as a function of frequency by scanning the frequency channel to be validated, wherein the frequency channel is scanned using a narrow filter while the radio transmitter of the first radio station is activated so as to emit a radio signal in the frequency channel to be validated,
controlling the radio receiver to measure a background power spectral density as a function of frequency by scanning the frequency channel to be validated with the radio receiver of the second radio station, wherein the frequency channel is scanned using the narrow filter while the radio transmitter of the first radio station is turned off, wherein the status determination module is further capable of comparing the measured signal power spectral density to the measured background power spectral density, and
setting a second validation status of the frequency channel as a function of the signal-to-noise ratio, wherein the second validation status is set to invalid in response to the signal-to-noise ratio being lower than a predefined threshold.

**13.** A control device in accordance with claim 12, further comprising:

an electromagnetic simulation module capable of computing the expected received signal level.

**14.** A control device in accordance with any one of claim 12 to 13, wherein the control device (30) is arranged in the first or second radio station (1).

FIG.1

FIG.2

| Input data | Value | Unit |
|---|---|---|
| true Azimuth angle from Site A to Site B | 93,3 | ° |
| Channel Frequency [GO] | 7569 | MHz |
| true Azimuth angle from Site B to Site A | 273,32 | ° |
| Channel Frequency [Return] | 7737,000 | MHz |
| Channel Width | 28 | MHz |
| Polarisation | Horizontal | text |
| Link Distance | 20,84 | km |
|  |  |  |
| Site A Antenna type | WTB1.2-71D | text |
| Height (Network Design definition) | 48 | m |
| diameter | 4 | ft |
| Gain | 36,4 | dB |
| Site B Antenna type | WTB1.2-71D | text |
| Height (Network Design definition) | 45 | m |
| diameter | 4 | ft |
| Gain | 36,4 | dB |
| Tx Power | 25 | dBm |
| Tx Branching Loss | 0 | dB |
| Rx Branching Loss | 0 | dB |
| output data | Value | Unit |
| RSL (Network Design definition) | -41,3 | dBm |

FIG.3

```
┌──────────────────────────────┐
21 ──  │   Turn on Channel transmitter   │
└──────────────────────────────┘
              │
              ▼
┌──────────────────────────────┐
22 ──  │  Scan frequency channel with    │
│  Receiver to Measure RSL as a   │
│  function of Frequency          │
└──────────────────────────────┘
              │
              ▼
┌──────────────────────────────┐
23 ──  │   Compare measured RSL to       │
│   expected RSL at central       │
│   frequency                     │
└──────────────────────────────┘
              │
              ▼
┌─ ─ ─ ─ ─ ─ ─ ─ ─ ─ ─ ─ ─ ─┐
24 ──  │   Take corrective action        │
│ (antenna alignment, site visit │
│   of the actual path)           │
└─ ─ ─ ─ ─ ─ ─ ─ ─ ─ ─ ─ ─ ─┘
```

Fig. 6

10

DAX 4-59  DAX 4-59  Gain = 34.5 dBi  BW = 2.8°  5925 - 6425 MHz

(dB)

ANGLE (°)

FIG.4

FIG.5

*21*

Turn on Channel transmitter

*22*

Scan frequency channel with Receiver to Measure RSL as a function of Frequency

*25*

Turn off Channel transmitter

*26*

Scan frequency channel with Receiver to Measure RSL as a function of Frequency

*27*

Determine Signal-to-Noise Ratio in the frequency channel

*28*

Take corrective action

Fig. 7

FIG. 8

**EP 2 768 166 A1**

Europäisches Patentamt
European Patent Office
Office européen des brevets

# EUROPEAN SEARCH REPORT

Application Number

EP 13 30 5186

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Racom: "Ray Microwave Link User Manual", , 6 February 2013 (2013-02-06), XP055061803, Retrieved from the Internet: URL:http://www.racom.eu/download/mikrovlny /free/eng/01_ray/ray-m3-en.pdf#d5e1 [retrieved on 2013-05-03] * section 2 * * section 3 * * section 5.5 * * section 6.2.2 * * section 6.7 * * section 6.8.2 * ----- | 1-15 | INV. H04B17/00 |
| X | US 7 642 961 B1 (RAUSCH WALTER F [US]) 5 January 2010 (2010-01-05) | 1-5, 9-13,15 | |
| A | * column 4, line 40 - line 63 * * column 7, line 34 - line 37 * * column 8, line 65 - column 9, line 1 * ----- | 6-8,14 | |
| | | | TECHNICAL FIELDS SEARCHED (IPC) |
| | | | H04B |

The present search report has been drawn up for all claims

| Place of search | Date of completion of the search | Examiner |
|---|---|---|
| The Hague | 17 May 2013 | Riposati, Benedetto |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 13 30 5186

This annex lists the patent family members relating to the patent documents cited in the above-mentioned European search report.
The members are as contained in the European Patent Office EDP file on
The European Patent Office is in no way liable for these particulars which are merely given for the purpose of information.

17-05-2013

| Patent document cited in search report | Publication date | Patent family member(s) | Publication date |
|---|---|---|---|
| US 7642961 B1 | 05-01-2010 | NONE | |

EPO FORM P0459

For more details about this annex : see Official Journal of the European Patent Office, No. 12/82